# EUROPÄISCHE PATENTSCHRIFT

(11) **EP 1 590 257 B1**
(45) Veröffentlichungstag und Bekanntmachung des Hinweises auf die Patenterteilung: **13.08.2008**
(21) Anmeldenummer: 04704988.7
(22) Anmeldetag: 24.01.2004
(51) Int. Cl.: B65D 47/24, B65D 47/20

(54) **EINWEGVENTILEINRICHTUNG**
ONE-WAY VALVE DEVICE
DISPOSITIF DE VALVE UNIDIRECTIONNELLE

(30) Priorität: 30.01.2003 DE 10303605
(43) Veröffentlichungstag der Anmeldung: 02.11.2005
(73) Patentinhaber: GAPLAST GmbH, D-82442 Altenau (DE)
(72) Erfinder: KNEER, Roland, 82491 Farchant (DE)
(74) Vertreter: Flosdorff, Jürgen
(86) Internationale Anmeldenummer: PCT/DE2004/000105
(87) Internationale Veröffentlichungsnummer: WO 2004/067400

(56) Entgegenhaltungen:
- EP-A- 0 172 711
- EP-A- 1 266 840
- FR-A- 2 604 153
- FR-A- 2 681 050
- GB-A- 2 106 480

## Beschreibung

Die Erfindung betrifft eine Einwegventileinrichtung zur Abgabe eines fließfähigen Materials aus einem vorzugsweise volumenreduzierbaren Behälter, mit einer Außenkappe, die auf dem Behälterhals sitzt und eine Austrittsöffnung für das Material aufweist gemäss Oberbegriff des Patentanspruchs 1. Eine solche Einwegventileinrichtung wird in GB-A-2106480 offenbart.

Wenn der Behälter volumenreduzierbar ist, kann er beispielsweise aus einem starren Außenbehälter und einem flexiblen Innenbeutel bestehen, der sich nach Abgabe von Behälterinhalt jeweils entsprechend zusammenzieht, wobei zum Druckausgleich zwischen dem starren Außenbehälter und dem Innenbeutel Druckausgleichsöffnungen in dem Außenbehälter vorgesehen sind. Der Behälter kann aber auch einwandig sein und beispielsweise die Form einer Tube haben, die zur Abgabe des Materials zusammengedrückt wird. Weitere Beispiele für volumenreduzierbare Behälter sind Faltenbalg-Behälter, die bei der Abgabe des fließfähigen Materials allmählich zusammenfallen, sowie Spritzen, deren Volumen durch Vorschub eines Spritzenkolbens reduzierbar ist. Diese Aufzählung ist nicht als abschließend, sondern als beispielhaft zu betrachten.

Wenn der Behälter nicht volumenreduzierbar ist, kann der Volumenausgleich bei der Abgabe des Behälterinhalts auch durch einströmende Luft erfolgen, die dann einen Sterilfilter durchströmen sollte.

Der fließfähige Behälterinhalt kann flüssig sein, und dabei in flüssiger Form oder als Spray abgegeben werden, oder es kann sich um eine Suspension, eine Creme, ein Gel, eine Salbe oder eine andere Substanz mit gegebenenfalls hoher Viskosität handeln.

Die Einwegventileinrichtung der betrachteten Art gibt den Behälterinhalt in Teilmengen ab, wobei die dosierte Abgabe über einen längeren Zeitraum verteilt erfolgen kann.

In vielen Anwendungsfällen ist es wichtig, daß das in dem Behälter verbleibende Füllmaterial nicht durch Kontaminationen beeinträchtigt wird, bei denen es sich z.B. um Mikroorganismen oder anorganische oder organische Verunreini-gungen handeln kann. Dies ist vor allem bei pharmazeutischen Materialien, z.B. aber auch bei kosmetischen Behälterinhalten qualitätsbestimmend und trifft auch beispielsweise auf fließfähige Substanzen zu, die den Nahrungsmitteln zuzurechnen sind. Aus diesem Grund darf das aus dem Behälter abgegebene Materialvolumen nicht durch Eintritt von (ungefilterter) Luft in den Behälter ausgeglichen werden, wenn verhindert werden soll, daß Bakterien, Staub, Feuchtigkeit, Sauerstoff etc. mit dem verbleibenden Behälterinhalt in Berührung kommen, weshalb sich bei dem hier vorzugsweise betrachteten Behälter entsprechend der abgegebenen Materialmenge das Volumen reduziert. Es muß vor allem gewährleistet sein, daß keine Mikroorganismen durch die Behälteröffnung eindringen und den verbleibenden Behälterinhalt kontaminieren.

Außerdem ist natürlich wichtig, daß sichergestellt ist, daß keinerlei Behälterinhalt selbsttätig, beispielsweise beim Transport des Behälters, austritt.

Der vorliegenden Erfindung liegt die Aufgabe zugrunde, eine Einwegventileinrichtung der betrachteten Art anzugeben, bei der die Sterilität des in dem Behälter verbleibenden fließfähigen Materials gewährleistet ist und bei der außerdem sichergestellt ist, daß keinerlei Behälterinhalt von sich aus aus dem Behälter austritt.

Diese Aufgabe wird erfindungsgemäß durch die Merkmale des Patentanspruchs 1 gelöst.

Vorteilhafte Ausgestaltungen der Erfindung sind in den abhängigen Ansprüchen gekennzeichnet.

Die erfindungsgemäße Einwegventileinrichtung enthält einen Ventilsitz, der aus einem starren Kunststoff wie PE/PP besteht und in dem Hals des Behälters angeordnet ist, wenn der Behälter einen solchen Hals besitzt. Wenn der Behälter hingegen beispielsweise eine durchgehende Rohrform hat, ist der Ventilsitz in den Endabschnitt des Behälters eingesetzt.

Der Ventilsitz enthält einen Basiskörper, der sich quer über die Öffnung des Behälterhalses erstreckt und in diesem Teil wenigstens eine Durchgangsöffnung hat, die - bei ihrer Freigabe - den Durchtritt des fließfähigen Materials in Richtung der Austrittsöffnung des Behälters zuläßt. Der Basiskörper enthält außer dem kreisförmigen, sich quer über die Durchgangsöffnung erstreckenden Teil einen Abschnitt, der an der Innenwand des Behälterhalses anliegt. Außerdem ist mit dem kreisförmigen Teil des Basiskörpers in dessen Mitte ein bevorzugt stiftartiger Vorsprung verbunden, bevorzugt an diesem einstückig angesetzt, der sich in axialer Richtung des Behälterhalses zu der Austrittsöffnung des Behälters erstreckt.

Die erfindungsgemäße Einwegventileinrichtung enthält ferner eine elastische Dichtung, die einen Ringabschnitt hat, der wenigstens teilweise an dem kreisförmigen Teil des Basiskörpers des Ventilsitzes anliegt und die Durchgangsöffnung überdecken kann (aber nicht muß) und einen einstückig damit ausgebildeten hülsenförmigen Abschnitt, der den stiftartigen Vorsprung des Ventilsitzes mit radialem Abstand umgibt, mit Ausnahme eines Endabschnitts des hülsenförmigen Teils, der im geschlossenen Zustand der Ventileinrichtung an dem stiftartigen Vorsprung anliegt. Der Ringabschnitt der elastischen Dichtung ist dabei radial außerhalb der wenigstens einen Durchgangsöffnung des Ventilsitzes an den Ventilsitz angedrückt.

Außerdem sieht die Erfindung vor, daß die Außenkappe zwischen einer bezüglich des Behälters rückwärtigen Schließstellung und einer vorgeschobenen Öffnungsstellung bewegbar angeordnet ist und einen inneren ringförmigen Ansatz aufweist, der in der Schließstellung den hülsenförmigen Abschnitt der Dichtung in Anlage an den stiftartigen Vorsprung drückt.

Bei der erfindungsgemäßen Einwegventileinrichtung ist durch diese Ausbildung die Sterilität des in dem Behälter verbleibenden Materials gewährleistet, wobei in der Verschlußstellung der Außenkappe zudem sichergestellt ist, daß keinerlei Behälterinhalt ungewollt, beispielsweise in einer Überkopfstellung des Behälters, austreten kann, da die Außenkappe die Dichtung fest an den stiftartigen Ansatz des Ventilsitzes anpreßt und auf diese Weise die Strömungsbahn des Behälterinhalts nach außen sicher verschließt. Die Schließstellung der Außenkappe ist dabei vorzugsweise durch eine lösbare Verrastung gesichert. Dabei kann auch vorgesehen sein, daß die Öffnungsstellung der Außenkappe durch eine Rastnase etc. lösbar fixierbar ist.

Mit großem Vorteil ist vorgesehen, daß das Einwegventil eine Sterilisationszone in dem Zwischenraum zwischen dem stiftartigen Vorsprung des Ventilsitzes und dem hülsenförmigen Abschnitt der elastischen Dichtung enthält, wobei die Sterilisationseinrichtung eine keimtötende Wirkung auf evtl. eingedrungene Mikroorganismen etc. ausübt. Diese Sterilisationszone kann ein vorzugsweise spiralförmiges Sterilisationselement sein, das den Vorsprung umgibt, oder sie kann durch Beschichten wenigstens von Teilen des Ventilsitzes und/oder der Dichtung mit oligodynamisch wirksamen Metallen bzw. bakterizid wirkenden Stoffen gebildet sein.

Außerdem wird mit großem Vorteil vorgeschlagen, daß zwischen dem Endabschnitt des bevorzugt stiftartigen Vorsprungs und der diesen umgebenden Außenkappe oberhalb der Dichtung ein ringförmiger Hohlraum verbleibt, in dem eine weitere Sterilisationszone angeordnet ist. Auch diese Sterilisationszone kann durch Beschichten von den ringförmigen Hohlraum begrenzenden Flächen gebildet sein.

Bei der erfindungsgemäßen Einwegventileinrichtung verschließt der Ventilsitz bis auf seine wenigstens eine Durchgangsöffnung den Behälterhals. Im geschlossenen Zustand des Ventils liegt die elastische Dichtung mit ihrem Ringabschnitt fest auf dem kreisförmigen Abschnitt des Basiskörpers des Ventilsitzes auf, da sie in ihrem ringförmigen Außenbereich in Anlage an den Ventilsitz gepreßt ist. Die flach auf dem Basiskörper des Ventilsitzes aufliegende elastische Dichtung schließt dabei bevorzugt die wenigstens eine Durchgangsöffnung des Ventilsitzes. Allerdings liegt es auch im Rahmen der Erfindung, daß die Dichtung im Bereich der wenigstens einen Durchtrittsöffnung bereits in den hülsenförmigen Abschnitt übergegangen sein kann, d.h. in diesem Falle schließt die Dichtung im unbetätigten Zustand des Ventils nicht die Durchgangsöffnung, was bei einem Behälterinhalt hoher Viskosität zweckmäßig sein kann, um die zum Ausbringen von Behälterinhalt erforderliche Kraft zu verringern.

Die elastische Dichtung liegt außerdem im oberen Endbereich ihres hülsenförmigen Abschnitts im geschlossenen Zustand des Einwegventils fest an dem Umfang des stiftförmigen Vorsprungs an, so daß die Austrittsbahn des Behälterinhalts sicher verschlossen ist. Auf diese Weise ist gewährleistet, daß keinerlei Behälterinhalt austreten kann, und Schadstoffe können somit nicht zu dem zwischen der Dichtung und dem stiftförmigen Vorsprung befindlichen Behälterinhalt gelangen.

Wenn bevorzugt durch Aufbringen einer äußeren Kraft auf den Behälter ein Druck auf den Behälterinhalt ausgeübt wird, wird das fließfähige Material durch die wenigstens eine Durchgangsöffnung des Ventilsitzes gegen den bevorzugt darüberliegenden Ringabschnitt der elastischen Dichtung gepreßt, wodurch diese von dem Basiskörper des Ventilsitzes angehoben wird. Dies ist auch dann der Fall, wenn die Dichtung eine solche Form hat, daß sie die wenigstens eine Durchgangsöffnung mit einem gewissen Abstand überdeckt. Der Durchtritt des Behälterinhalts in den Zwischenraum zwischen dem stiftartigen Vorsprung und dem hülsenförmigen Abschnitt der elastischen Dichtung hat zur Folge, daß sich der hülsenförmige Abschnitt in axialer Richtung des Behälterhalses bewegt und damit eine ringförmige Durchtrittsbahn für den Behälterinhalt zwischen dem hülsenförmigen Abschnitt der Dichtung und dem stiftartigen Vorsprung freigibt. Wenn kein Druck mehr auf den Behälterinhalt ausgeübt wird, kehrt die Dichtung infolge ihrer Elastizität in ihre Ausgangslage zurück. Durch Verlagerung der Außenkappe in die Schließstellung wird die an sich schon an dem stiftartigen Vorsprung anliegende Dichtung fest gegen den Vorsprung gepreßt und in dieser Position gehalten.

Die bevorzugt in dem Zwischenraum zwischen der Dichtung und dem Ventilsitz angeordnete Sterilisationszone kann den Vorsprung des Ventilsitzes in einer Spiralform umgeben. Dabei sollten die Abmessungen so getroffen sein, daß die Sterilisationszone, die durch eine beschichtete Schraubenfeder gebildet sein kann, am oberen Endbereich des Vorsprungs sowohl mit diesem als auch mit dem hülsenförmigen Abschnitt der Dichtung in Kontakt steht, so daß evtl. in die Austrittsöffnung des Behälters eintretende Mikroorganismen zwangsläufig das Sterilisationselement passieren, wenn sie nach unten wandern. Damit ist in diesem Bereich eine mikrobielle Kontamination sicher vermieden.

Die Sterilisationszone besteht bevorzugt aus Silber oder enthält eine Silberbeschichtung, die eine keimtötende Wirkung entfaltet. Anstelle von Silber sind auch andere oligodynamisch wirksame Metallen oder bakterizide Substanzen verwendbar.

Da auch oberhalb der Dichtung zwischen dem Endabschnitt des stiftartigen Vorsprungs und der diesen umgebenden Außenkappe eine Sterilisationszone, bevorzugt durch Wandbeschichtung, ausgebildet ist, werden durch die Austrittöffnung des Behälters eingetretene Mikroorganismen etc. bereits hier wirksam bekämpft, so daß der Behälterinhalt steril bleibt.

Mit großem Vorteil ist ferner vorgesehen, daß die erfindungsgemäße Einwegventileinrichtung unter der Außenkappe eine ringförmige Innenkappe enthält, die an dem Behälterhals befestigt ist, und diesen mit einer äußeren Ringwand und einer inneren Ringwand übergreift. Diese Innenkappe ist bevorzugt dadurch auf dem Behälterhals befestigt, daß sie mit einem inneren Ringvorsprung ihrer Außenwand einen außen am Behälterhals vorstehenden umlaufenden Vorsprung untergreift, wobei die Anordnung so getroffen ist, daß die ringförmige Innenkappe nicht-drehbar auf dem Behälterhals sitzt.

Weiter wird vorgeschlagen, daß die äußere Ringwand der Innenkappe ein Außengewinde aufweist, das in Eingriff mit einem Innengewinde einer gegenüberliegenden Ringwand der Außenkappe steht. Damit ist die Außenkappe gegenüber den übrigen Bestandteilen der Einwegventileinrichtung drehbar, wobei der Drehbereich durch Anschläge begrenzt sein sollte. Beispielsweise kann vorgesehen sein, daß die Außenkappe mit einer halben Umdrehung von der Schließstellung in die Öffnungsstellung versetzt werden kann.

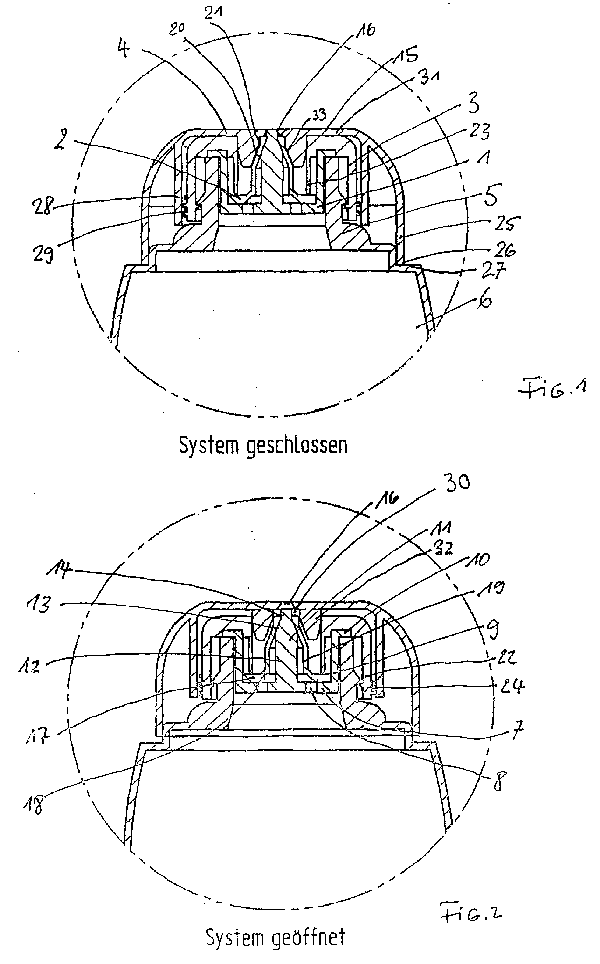

Infolge der Drehung in die Öffnungsstellung wird die Außenkappe in axialer Richtung des Behälters vorgeschoben, wobei der innere ringförmige Ansatz der Außenkappe den Preßsitz des hülsenförmigen Abschnitts der Dichtung freigibt. Gleichzeitig tritt - relativ betrachtet - der Endabschnitt des stiftartigen Vorsprungs aus der Austrittsöffnung der Außenkappe aus, womit bei Ausüben eines Drucks auf den Behälterinhalt der hülsenförmige Abschnitt der Dichtung in axialer Richtung (in der Darstellung der Figuren 1 und 2 nach oben) verlagert werden kann. Damit kann Behälterinhalt zwischen dem stiftartigen Vorsprung und dem hülsenartigen Abschnitt der Dichtung hindurchtreten und durch die nun freie Austrittsöffnung der Außenkappe den Behälter verlassen.

In weiteren Einzelheiten wird vorgeschlagen, daß der stiftartige Vorsprung einen sich zum freien Ende hin verjüngenden axialen Abschnitt aufweist, an den der hülsenförmige Abschnitt der Dichtung durch den inneren ringförmigen Ansatz der Außenkappe andrückbar ist. Der innere ringförmige Ansatz der Außenkappe sollte - querschnittlich betrachtet - einen schräg sich nach unten erweiternden Wandabschnitt aufweisen, der mit dem sich verjüngenden axialen Abschnitt des Vorsprungs zusammenwirkt. Der ringförmige Ansatz der Außenkappe kann sich im Schließzustand radial außen an der inneren Ringwand der Innenkappe abstützen, wodurch eine hohe Verschlußkraft erzielt werden kann.

Der Basiskörper des Ventilsitzes enthält zweckmäßigerweise radial außerhalb des Vorsprungs mehrere Durchgangsbohrungen für den Durchtritt des Behälterinhalts.

Der im Zentrum der kreisförmigen, ebenen Basisplatte des Basiskörpers angeformte Vorsprung hat bevorzugt einen kreiszylindrischen Abschnitt, einen anschließenden, sich verjüngenden, vorzugsweise konisch abgeschrägten Abschnitt und daran anschließend wiederum einen kreiszylindrischen Endabschnitt, dessen Oberkante innerhalb der Behälteröffnung der Außenkappe angeordnet ist, bevorzugt mit deren Oberseite fluchtet.

Der Ringabschnitt der Dichtung hat eine ebene Form und wird durch eine innere Ringwand der Innenkappe radial außerhalb der wenigstens einen Durchgangsöffnung in Anlage an der Basisplatte des Ventilsitzes gehalten.

In weiterer Ausgestaltung der Erfindung kann vorgesehen sein, daß der hülsenförmige Abschnitt der Dichtung im Längsschnitt ausgehend von dem Ringabschnitt zunächst einen konisch sich verjüngenden Abschnitt, anschließend einen zylindrischen Abschnitt und dann wieder einen konisch oder bogenförmig sich verjüngenden Abschnitt aufweist, der an seiner Außenseite wiederum in einem zylindrischen Abschnitt endet. Der hülsenförmige Abschnitt wird im Bereich seines oberen konisch oder sich bogenförmige verjüngenden Abschnitts an den stiftartigen Vorsprung angepreßt, wenn sich die Außenkappe in der Schließstellung befindet.

Weitere Einzelheiten der Erfindung ergeben sich aus der nachfolgenden Beschreibung einer bevorzugten Ausführungsform sowie anhand der Zeichnung. Dabei zeigen:
- Figur 1: einen Vertikalschnitt durch den oberen Endbereich eines Behälters, der mit einer Ausführungsform der Einwegventileinrichtung versehen ist, im geschlossenen Zustand des Systems und
- Figur 2: eine Darstellung entsprechend Figur 1 im geöffneten Zustand des Systems.

Die erfindungsgemäße Einwegventileinrichtung enthält einen Ventilsitz 1, der in den Hals 5 eines Behälters 6 eingesetzt ist, eine elastische Dichtung 2, eine Innenkappe 3 und eine Außenkappe 4.

Der Ventilsitz 1 besteht aus einer ebenen, kreisförmigen Basisplatte 7, durch die mehrere in Umfangsrichtung gleichmäßig voneinander beabstandete Durchgangsöffnungen 8 verlaufen, einer außen anschließenden zylindrischen Umfangswand 9, die an der Innenwand des Behälterhalses 5 dicht anliegt, und in einem nach außen weisenden Ringbund 10 endet, der auf der Oberkante des Behälterhalses 5 aufliegt.

In der Mitte der kreisförmigen Basisplatte 7 ist ein stiftartiger oder zapfenförmiger Vorsprung 11 angeformt, der im rechten Winkel von der Basisplatte 7 absteht und - ausgehend von dieser - einen kreiszylindrischen Abschnitt 12 hat, der in einen kegelstumpfförmig sich nach oben verjüngenden, Abschnitt 13 übergeht, an den sich ein wiederum kreiszylindrischer Endabschnitt 14 anschließt. Im geschlossenen Zustand des Systems ragt der Endabschnitt 14 in eine mittige Austrittsöffnung 16 der Behälterkappe 4 hinein und schließt mit seiner Oberseite bündig mit der Oberseite der Außenkappe 4 ab. Bei geöffnetem System ist die Außenkappe 4 in der Darstellung der Figur 2 nach oben verlagert, so daß die Austrittsöffnung 16 der Außenkappe 4 frei liegt.

Die Dichtung 2, die aus einem elastischen Kunststoff besteht, ist ebenso wie der Ventilsitz 1 einstückig hergestellt und enthält einen Ringabschnitt 17, der an seinem inneren Umfangsrand in einen hülsenförmigen Abschnitt übergeht, dessen Mittellängsachse senkrecht zur Ebene des Ringabschnitts 17 verläuft. Der hülsenförmige Abschnitt besteht - ausgehend von dem Ringabschnitt 17 - aus einem ersten konisch sich nach oben verjüngenden Abschnitt 18, einem anschließenden kreiszylindrischen Abschnitt 19, daran anschließend wiederum aus einem konisch oder bogenförmig sich verjüngenden Abschnitt 20 und einem Endabschnitt 21, dessen Außenwand wiederum kreiszylindrisch geformt ist. Der sich verjüngende Abschnitt 20 kann im geöffneten System lose an dem Abschnitt 13 des stiftartigen Vorsprungs 11 anliegen und ist bei geschlossenem System gegen diesen Abschnitt fest angepreßt.

Die Innenkappe 3 enthält eine äußere Ringwand 22, die mit einem innen umlaufenden Vorsprung einen äußeren Vorsprung des Behälterhalses 5 untergreift, sowie eine in den Behälterhals 5 eingreifende innere Ringwand 23, die den Ringabschnitt 17 der Dichtung 2 fest gegen den Ventilsitz drückt, und zwar radial außerhalb der Durchgangsöffnungen 8. Die äußere Ringwand 22 ist mit einem Außengewinde 24 versehen.

Die Außenkappe 4 enthält eine insgesamt etwa glockenförmige Außenwand 25, die mit ihrer in den Figuren unteren Stirnkante 26 im geschlossenen Zustand des Systems auf einer Schulter 27 des Behälters 6 aufliegt. Radial innerhalb der glockenartigen Umfangswand 25 enthält die Außenkappe 4 eine Ringwand 28, die mit einem Innengewinde 29 in das Gewinde 24 der Innenkappe eingreift. Die Außenkappe 4 ist damit drehbar an dem Behälterhals angeordnet und durch eine entsprechende Drehung nach oben in die Öffnungsstellung verlagerbar, wie Figur 2 zeigt. In geöffnetem Zustand ist die Randkante 26 von der Schulter 27 beabstandet und die sich konisch nach oben verjüngende Austrittsöffnung 16 liegt frei.

Oberhalb der Stirnkante der Dichtung 2 verbleibt ein Hohlraum 30, dessen Begrenzungswände mit einem sterilisierenden Material beschichtet sein können.

An der Unterseite der oberen Wand 31 der Außenkappe 4 ist ein nach unten ragender ringförmiger Vorsprung 32 angeformt, der mit einer schrägen Innenwand 33 im geschlossenen Zustand des Systems den Abschnitt 20 der Dichtung 2 (oder einen Teilabschnitt davon) fest gegen den Abschnitt 13 des Vorsprungs 11 preßt, so daß der Behälterinhalt nicht aus dem Behälter bzw. der Austrittsöffnung 16 austreten kann.

In dem ringförmigen Zwischenraum zwischen dem stiftartigen Vorsprung 11 des Ventilsitzes und dem insgesamt hülsenförmigen Abschnitt der Dichtung 2 kann ein mit einer Silberbeschichtung versehenes Sterilisationselement in Form einer Spiralschraube angeordnet sein, die den Vorsprung 11 mit geringem Abstand umgibt.

Wenn unter Druck stehendes oder unter Druck gesetztes Füllmaterial des Behälters 6 durch die Durchgangsöffnungen 8 des Ventilsitzes 1 hindurchgedrückt wird, wird der radial innere Bereich der Dichtung 2 nach oben angehoben, d.h. der gesamte hülsenförmige Abschnitt der Dichtung 2 wandert nach oben, und Füllmaterial tritt zwischen der Dichtung 2 und dem stiftartigen Vorsprung 1 hindurch und aus der Austrittsöffnung 16 aus. Wenn kein Druck mehr auf den Behälterinhalt ausgeübt wird, kehrt das Dichtungselement 2 aufgrund der Elastizität seines Werkstoffs selbsttätig in die Ausgangsstellung zurück, in der sie an dem stiftartigen Vorsprung 11 in dessen oberen Bereich anliegt.

## Patentansprüche

1. Einwegventileinrichtung zur Abgabe eines fließfähigen Materials aus einem vorzugsweise volumenreduzierbaren Behälter mit einer Außenkappe, die eine Austrittsöffnung für das Material aufweist,
**gekennzeichnet durch**
einen Ventilsitz (1), der in dem Behälterhals (5) angeordnet ist und einen Basiskörper (7,9), der sich quer über die Öffnung des Behälterhalses (5) erstreckt und an der Innenwand des Behälterhalses (5) anliegt und wenigstens eine Durchgangsöffnung (8) enthält, und einen Vorsprung (11) aufweist, der sich in axialer Richtung des Behälterhalses (5) zu der Austrittsöffnung (16) erstreckt und
eine elastische Dichtung (2), die einen Ringabschnitt (17), der an dem Basiskörper anliegt, und einen hülsenförmigen Abschnitt aufweist, der den Vorsprung (11) mit radialem Abstand umgibt mit Ausnahme seines Endabschnitts (20), der im geschlossenen Zustand der Einwegventileinrichtung an dem Vorsprung (11) anliegt,
wobei die Außenkappe (4) zwischen einer rückwärtigen Schließstellung und einer vorgeschobenen Öffnungsstellung bewegbar angeordnet ist und einen inneren ringförmigen Ansatz (32) aufweist, der in der Schließstellung den hülsenförmigen Abschnitt der Dichtung (2) in Anlage an den Vorsprung (11) drückt.

2. Einwegventileinrichtung nach Anspruch 1,
ferner **gekennzeichnet durch**
eine ringförmige Innenkappe (3), die an dem Behälterhals (5) befestigt ist und diesen mit einer äußeren Ringwand (22) und einer inneren Ringwand (23) übergreift.

3. Einwegventileinrichtung nach Anspruch 2,
**dadurch gekennzeichnet,**
**daß** die äußere Ringwand (22) der Innenkappe (3) ein Außengewinde (24) aufweist, das in Eingriff mit einem Innengewinde (29) einer Ringwand (28) der Außenkappe (4) steht.

4. Einwegventileinrichtung nach Anspruch 3,
**dadurch gekennzeichnet,**
**daß** an der Innenkappe und/oder der Außenkappe Anschläge ausgebildet sind, durch die der Drehbereich der Außenkappe begrenzt ist.

5. Einwegventileinrichtung nach einem der Ansprüche 2 bis 4,
**dadurch gekennzeichnet,**
**daß** die innere Ringwand (23) der Innenkappe (3) den Ringabschnitt (17) der Dichtung (2) gegen den Basiskörper (7) des Ventilsitzes (1) drückt.

6. Einwegventileinrichtung nach einem der Ansprüche 1 bis 5,
**dadurch gekennzeichnet,**
**daß** der stiftartige Vorsprung (11) einen sich zu seinem freien Ende hin verjüngenden axialen Abschnitt (13) aufweist, an den der hülsenförmige Abschnitt der Dichtung (2) durch den inneren Ansatz (32) der Außenkappe (4) andrückbar ist.

7. Einwegventileinrichtung nach Anspruch 6,
**dadurch gekennzeichnet,**
**daß** der innere ringförmige Ansatz (32) der Außenkappe (4) einen schräg sich nach unten erweiternden Wandabschnitt (33) aufweist, der mit dem sich verjüngenden axialen Abschnitt (13) des Vorsprungs (11) zusammenwirkt.

8. Einwegventileinrichtung nach einem der Ansprüche 1 bis 7,
**dadurch gekennzeichnet,**
**daß** zwischen dem Endabschnitt des bevorzugt stiftartigen Vorsprungs (11) und der diesen umgebenden Außenkappe (4) oberhalb der Dichtung (2) ein Hohlraum (30) verbleibt.

9. Einvvegventileinrichtung nach Anspruch 8,
**dadurch gekennzeichnet,**
**daß** in dem Hohlraum (30) eine Sterilisationszone angeordnet ist.

10. Einwegventileinrichtung nach einem der Ansprüche 1 bis 9,
**dadurch gekennzeichnet,**
**daß** eine weitere Sterilisationszone zwischen dem Ventilsitz (1) und der Dichtung (2) angeordnet ist.

11. Einwegventileinrichtung nach einem der Ansprüche 1 bis 10,
**dadurch gekennzeichnet,**
**daß** der Basiskörper des Ventilsitzes (1) radial außerhalb des Vorsprungs (11) mehrere Durchgangsbohrungen (8) enthält.

12. Einwegventileinrichtung nach einem der Ansprüche 1 bis 11,
**dadurch gekennzeichnet,**
**daß** der Basiskörper der Ventileinrichtung (1) eine ebene Basisplatte (7) enthält, die in eine an der Innenwand des Behälterhalses (5) anliegende Umfangswand (9) übergeht, die mit einer außen umlaufenden Schulter (10) auf der Randkante des Behälterhalses (5) aufliegt.

13. Einwegventileinrichtung nach einem der Ansprüche 1 bis 12,
**dadurch gekennzeichnet,**
**daß** der Vorsprung (11) des Ventilsitzes (1) einen kreiszylindrischen Abschnitt (12), einen anschließenden, sich verjüngenden, vorzugsweise konisch abschrägten Abschnitt (13) und daran anschließend einen kreiszylindrischen Endabschnitt (14) hat.

14. Einwegventileinrichtung nach einem der Ansprüche 1 bis 12,
**dadurch gekennzeichnet,**
**daß** der Vorsprung (11) des Ventilsitzes (1) im Längsschnitt wenigstens teilweise eine bogenförmige Kontur hat.

15. Einwegventileinrichtung nach einem der Ansprüche 1 bis 14,
**dadurch gekennzeichnet,**
**daß** die Oberkante des Vorsprungs (11) im geschlossenen Zustand des Ventils innerhalb der Behälteröffnung (16) angeordnet ist.

16. Einwegventileinrichtung nach einem der Ansprüche 1 bis 15,
**dadurch gekennzeichnet,**
**daß** der Ringabschnitt (17) der Dichtung (2) eine ebene Form hat und durch die innere Ringwand (23) der Innenkappe (3) radial außerhalb der Durchgangsöffnungen (8) in Anlage an dem Ventilsitz (1) gehalten ist.

17. Einwegventileinrichtung nach einem der Ansprüche 1 bis 16,
**dadurch gekennzeichnet,**
**daß** der hülsenförmige Abschnitt der Dichtung (2) im Längsschnitt ausgehend von dem Ringabschnitt (13) zunächst konisch sich verjüngend, dann zylindrisch, anschließend wiederum konisch zulaufend und an seiner Außenseite zylindrisch ausgebildet ist.

18. Einwegventileinrichtung nach einem der Ansprüche 1 bis 16,
**dadurch gekennzeichnet,**
**daß** der hülsenförmige Abschnitt der Dichtung (2) im Längsschnitt eine bogenförmige Kontur hat.

19. Einwegventileinrichtung nach einem der Ansprüche 1 bis 18,
**dadurch gekennzeichnet,**
**daß** die Oberkante des Vorsprungs (11) des Ventilsitzes (1) im geschlossenen Zustand des Ventils mit der Oberseite (15) der Außenkappe (4) fluchtet.

20. Einwegventileinrichtung nach einem der Ansprüche 1 bis 19,
**dadurch gekennzeichnet,**
**daß** wenigstens eine Sterilisationszone ein spiralförmiges Sterilisationselement enthält, das den Vorsprung (11) umgibt.

21. Einwegventileinrichtung nach Anspruch 20,
**dadurch gekennzeichnet,**
**daß** die Sterilisationszone im geschlossenen Zustand des Ventils am oberen Endbereich sowohl mit dem Vorsprung (11) als auch mit dem hülsenförmigen Abschnitt der Dichtung (2) in Kontakt steht.

22. Einwegventileinrichtung nach einem der Ansprüche 1 bis 21,
**dadurch gekennzeichnet,**
**daß** die Sterilisationszone aus Silber oder einem anderen oligodynamisch wirksamen Metall bzw. bakterizid wirkenden Stoff besteht oder damit beschichtet ist.

23. Einwegventileinrichtung nach einem der Ansprüche 1 bis 19,
**dadurch gekennzeichnet,**
**daß** wenigstens eine Sterilisationszone durch Beschichten wenigstens von Teilen des Ventilsitzes und/oder der Dichtung und/oder der Außenkappe mit oligodynamisch wirksamen Metallen bzw. bakterizid wirkenden Stoffen gebildet ist.

## Claims

1. A one-way valve device for dispensing a flowable material from a container, whose volume is preferably reduceable, with an outer cap, which includes an outlet opening for the material, **characterised by** a valve seat (1), which is disposed in the container throat (5), and a base body (7,9), which extends transversely over the opening in the container throat (5) and engages the inner wall of the container throat (5) and includes at least one passage (8) and has a projection (11), which extends in the axial direction of the container throat (5) to the outlet opening (16), and an elastic seal (2), which has an annular section (17), which engages the base body, and a sleeve-shaped section, which surrounds the projection (11) with a radial spacing with the exception of its end section (20), which, in the closed state of the one-way valve device, engages the projection (11), wherein the outer cap (4) is arranged to be moveable between a rearward closed position and an advanced open position and affords an inner, annular formation (32), which, in the closed position, presses the sleeve-shaped section of the seal (2) into engagement with the projection (11).

2. A one-way valve device as claimed in one claim 1, further **characterised by** an annular inner cap (3), which is secured to the container throat (5) and engages over it with an outer annular wall (22) and an inner annular wall (23).

3. A one-way valve device as claimed in claim 2, **characterised in that** the outer annular wall (22) of the inner cap (3) has an outer screw thread (24) which is in engagement with an inner screw thread (29) on an annular wall (28) of the outer cap (4).

4. A one-way valve device as claimed in claim 3, **characterised in that** formed on the inner cap and/or the outer cap there are abutments, by which the range of rotation of the outer cap is limited.

5. A one-way valve device as claimed in one of claims 2 to 4, **characterised in that** the inner annular wall (23) of the inner cap (3) presses the annular section (17) of the seal (2) against the base body (7) of the valve seat (1).

6. A one-way valve device as claimed in one of claims 1 to 5, **characterised in that** the peg-like projection (11) has an axial section (13), which tapers towards its free end and against which the sleeve-shaped section of the seal (2) may be pressed by the inner formation (32) on the outer cap (4).

7. A one-way valve device as claimed in claim 6, **characterised in that** the inner, annular formation (32) on the outer cap (4) has an obliquely downwardly expanding wall section (33) which cooperates with the tapering axial section (13) of the projection (11).

8. A one-way valve device as claimed in one of claims 1 to 7, **characterised in that** a cavity (30) remains above the seal (2) between the end section of the preferably peg-like projection (11) and the outer cap (4) surrounding it.

9. A one-way valve device as claimed in claim 8, **characterised in that** a sterilisation zone is disposed in the cavity (30).

10. A one-way valve device as claimed in one of claims 1 to 9, **characterised in that** a further sterilisation zone is disposed between the valve seat (1) and the seal (2).

11. A one-way valve device as claimed in one of claims 1 to 10, **characterised in that** the base body of the valve seat (1) includes a plurality of passages (8) radially outside the projection (11).

12. A one-way valve device as claimed in one of claims 1 to 11, **characterised in that** the base body of the valve device (1) includes a flat base plate (7), which merges into a peripheral wall (9), which engages the inner wall of the container throat (5) and which rests with an outer peripheral shoulder (10) on the edge of the container throat (5).

13. A one-way valve device as claimed in claims 1 to 12, **characterised in that** the projection (11) on the valve seat (1) has a circular cylindrical section (12) an adjoining tapering and preferably conically bevelled section (13) and a circular cylindrical end section (14) adjoining it.

14. A one-way valve device as claimed in one of claims 1 to 12, **characterised in that** the projection (11) on the valve seat (1) has an arcuate contour, at least in part, in longitudinal section.

15. A one-way valve device as claimed in one of claims 1 to 14, **characterised in that** the upper edge of the projection (11) is disposed within the container opening (16), in the closed state of the valve.

16. A one-way valve device as claimed in one of claims 1 to 15, **characterised in that** the annular section (17) of the seal (2) has a flat shape and is held in engagement with the valve seat (1) by the inner annular wall (23) of the inner cap (3) radially outside the passages (8).

17. A one-way valve device as claimed in one of claims 1 to 16, **characterised in that**, starting from the annular section (13), the sleeve-shaped section of the seal (2) is, in longitudinal section, initially of conically tapering shape, then cylindrical and then again of conically tapered shape and on its outer surface is cylindrical.

18. A one-way valve device as claimed in one of claims 1 to 16, **characterised in that** the sleeve-shaped section of the seal (2) has an arcuate contour in longitudinal section.

19. A one-way valve device as claimed in one of claims 1 to 18, **characterised in that** the upper edge of the projection (11) of the valve seat (1) is flush with the upper surface (15) of the outer cap (4), in the closed state of the valve.

20. A one-way valve device as claimed in one of claims 1 to 19, **characterised in that** at least one sterilisation zone contains a helical sterilisation element, which surrounds the projection (11).

21. A one-way valve device as claimed in claim 20, **characterised in that**, in the closed state of the valve, the sterilisation zone is in contact at the upper end region both with the projection (11) and also with the sleeve-shaped section of the seal (2).

22. A one-way valve device as claimed in one of claims 1 to 21, **characterised in that** the sterilisation zone consists of silver or a bactericidal substance or is coated therewith.

23. A one-way valve device as claimed in one of claims 1 to 19, **characterised in that** at least one sterilisation zone is formed by coating at least portions of the valve seat and/or the seal and/or the outer cap with oligodynamically active metals or bactericidal substances.

## Revendications

1. Dispositif à valve unidirectionnelle pour la distribution d'une matière fluide à partir d'un récipient, pouvant de préférence diminuer en volume, comportant une coiffe extérieure, qui est munie d'un orifice de sortie pour la matière,
**caractérisé par**
un siège de valve (1) qui est disposé dans le goulot (5) du récipient et qui comporte un corps de base (7, 9), qui s'étend transversalement au-dessus de l'ouverture du goulot (5) du récipient et est en appui contre la paroi intérieure du goulot (5) du récipient et contient au moins un trou débouchant (8), et une saillie (11), qui s'étend dans la direction axiale du goulot (5) du récipient vers l'orifice de sortie (16), et
une garniture d'étanchéité (2) élastique, qui comporte une partie annulaire (17), qui est en appui contre le corps de base, et une partie en forme de manchon, qui entoure la saillie (11) à distance radiale, à l'exception de sa partie d'extrémité (20) qui, dans la position fermée du dispositif à valve unidirectionnelle, est en appui contre la saillie (11),
la coiffe extérieure (4) étant agencée de manière mobile entre une position de fermeture en retrait et une position d'ouverture avancée, et comportant un talon (32) intérieur annulaire qui, dans la position de fermeture, pousse la partie en forme de manchon de la garniture d'étanchéité (2) en appui contre la saillie (11).

2. Dispositif à valve unidirectionnelle selon la revendication 1, **caractérisé en outre par** une coiffe intérieure (3) annulaire, qui est fixée sur le goulot (5) du récipient et enserre celui-ci par le dessus avec une paroi annulaire extérieure (22) et une paroi annulaire intérieure (23).

3. Dispositif à valve unidirectionnelle selon la revendication 2, **caractérisé en ce que** la paroi annulaire extérieure (22) de la coiffe intérieure (3) comporte un filetage extérieur (24) qui est en prise avec un filetage intérieur (29) d'une paroi annulaire (28) de la coiffe extérieure (4).

4. Dispositif à valve unidirectionnelle selon la revendication 3, **caractérisé en ce que** des butées, qui limitent la zone de rotation de la coiffe extérieure, sont réalisées sur la coiffe intérieure et/ou la coiffe extérieure.

5. Dispositif à valve unidirectionnelle selon l'une quelconque des revendications 2 à 4, **caractérisé en ce que** la paroi annulaire (23) intérieure de la coiffe intérieure (3) pousse la partie annulaire (17) de la garniture d'étanchéité (2) contre le corps de base (7) du siège de valve (1).

6. Dispositif à valve unidirectionnelle selon l'une quelconque des revendications 1 à 5, **caractérisé en ce que** la saillie (11) en forme de téton comporte une partie axiale (13), qui s'effile vers son extrémité libre et contre laquelle la partie en forme de manchon de la garniture d'étanchéité (2) peut être pressée par le talon (32) intérieur de la coiffe extérieure (4).

7. Dispositif à valve unidirectionnelle selon la revendication 6, **caractérisé en ce que** le talon (32) intérieur annulaire de la coiffe extérieure (4) comporte une partie de paroi (33), qui s'élargit en biais vers le bas et qui coopère avec la partie axiale (13) effilée de la saillie (11).

8. Dispositif à valve unidirectionnelle selon l'une quelconque des revendications 1 à 7, **caractérisé en ce qu'**une cavité (30) subsiste au-dessus de la garniture d'étanchéité (2) entre la partie d'extrémité de la saillie (11), de préférence en forme de téton, et la coiffe extérieure (4) entourant cette dernière.

9. Dispositif à valve unidirectionnelle selon la revendication 8, **caractérisé en ce qu'**une zone de stérilisation est disposée dans la cavité (30).

10. Dispositif à valve unidirectionnelle selon l'une quelconque des revendications 1 à 9, **caractérisé en ce qu'**une zone de stérilisation supplémentaire est disposée entre le siège de valve (1) et la garniture d'étanchéité (2).

11. Dispositif à valve unidirectionnelle selon l'une quelconque des revendications 1 à 10, **caractérisé en ce que** le corps de base du siège de valve (1) contient, dans le sens radial en dehors de la saillie (11), plusieurs forures débouchantes (8).

12. Dispositif à valve unidirectionnelle selon l'une quelconque des revendications 1 à 11, **caractérisé en ce que** le corps de base du siège de valve (1) comporte un socle (7) plan, qui se prolonge par une paroi périphérique (9), qui est en appui contre la paroi intérieure du goulot (5) du récipient et qui repose avec un épaulement (10) périphérique extérieur sur le bord du goulot (5) du récipient.

13. Dispositif à valve unidirectionnelle selon l'une quelconque des revendications 1 à 12, **caractérisé en ce que** la saillie (11) du siège de valve (1) comporte une partie (12) cylindrique circulaire, une partie (13) effilée adjacente, biaisée de préférence selon une forme conique, et une partie d'extrémité (14) cylindrique circulaire, adjacente à cette dernière.

14. Dispositif à valve unidirectionnelle selon l'une quelconque des revendications 1 à 12, **caractérisé en ce que** la saillie (11) du siège de valve (1) possède au moins en partie un contour courbe sur une coupe longitudinale.

15. Dispositif à valve unidirectionnelle selon l'une quelconque des revendications 1 à 14, **caractérisé en ce que**, dans la position fermée de la valve, le bord supérieur de la saillie (11) est disposé à l'intérieur de l'ouverture (16) du récipient.

16. Dispositif à valve unidirectionnelle selon l'une quelconque des revendications 1 à 15, **caractérisé en ce que** la partie annulaire (17) de la garniture d'étanchéité (2) a une forme plane et est maintenue en appui contre le siège de valve (1), dans le sens radial à l'extérieur des trous débouchants (8), par la paroi annulaire (23) intérieure de la coiffe intérieure (3).

17. Dispositif à valve unidirectionnelle selon l'une quelconque des revendications 1 à 16, **caractérisé en ce que** la partie en forme de manchon de la garniture d'étanchéité (2) sur une coupe longitudinale se rétrécit d'abord en forme de cône à partir de la partie annulaire (13), puis prend une forme cylindrique, ensuite se rétrécit à nouveau selon une forme conique et est réalisée avec une forme cylindrique sur sa face extérieure.

18. Dispositif à valve unidirectionnelle selon l'une quelconque des revendications 1 à 16, **caractérisé en ce que** la partie en forme de manchon de la garniture d'étanchéité (2) a un contour courbe sur une coupe longitudinale.

19. Dispositif à valve unidirectionnelle selon l'une quelconque des revendications 1 à 18, **caractérisé en ce que**, dans la position fermée de la valve, le bord supérieur de la saillie (11) du siège de valve (1) est aligné avec la face supérieure (15) de la coiffe extérieure (4).

20. Dispositif à valve unidirectionnelle selon l'une quelconque des revendications 1 à 19, **caractérisé en ce qu'**au moins une zone de stérilisation comporte un élément de stérilisation en forme de spirale qui entoure la saillie (11).

21. Dispositif à valve unidirectionnelle selon la revendication 20, **caractérisé en ce que**, dans la position fermée de la valve, la zone de stérilisation, au niveau de la zone d'extrémité supérieure, est en contact avec la saillie (11), de même qu'avec la partie en forme de manchon de la garniture d'étanchéité (2).

22. Dispositif à valve unidirectionnelle selon l'une quelconque des revendications 1 à 21, **caractérisé en ce que** la zone de stérilisation est réalisée en argent ou dans un autre métal à action oligodynamique ou dans une matière à action bactéricide, ou est revêtu de l'un de ces matériaux.

23. Dispositif à valve unidirectionnelle selon l'une quelconque des revendications 1 à 19, **caractérisé en ce qu'**au moins une zone de stérilisation est formée par un revêtement en métaux à action oligodynamique ou en matières à action bactéricide, déposé au moins sur des parties du siège de valve et/ou de la garniture d'étanchéité et/ou de la coiffe extérieure.
